# EUROPÄISCHE PATENTSCHRIFT

(11) **EP 1 533 211 B1**
(45) Veröffentlichungstag und Bekanntmachung des Hinweises auf die Patenterteilung: **17.10.2007**
(21) Anmeldenummer: 04025710.7
(22) Anmeldetag: 29.10.2004
(51) Int. Cl.: B62D 6/00

(54) **Lenkvorrichtung für ein Flurförderzeug**
Steering device for an industrial truck
Dispositif de direction pour un chariot de manutention

(30) Priorität: 21.11.2003 DE 10354410
(43) Veröffentlichungstag der Anmeldung: 25.05.2005
(73) Patentinhaber: STILL WAGNER GmbH & Co KG, 72766 Reutlingen-Mittelstadt (DE)
(72) Erfinder: Ruck, Armin, 72124 Pliezhausen (DE)
(74) Vertreter: Geirhos, Johann

(56) Entgegenhaltungen:
- EP-A- 1 415 890
- DE-A1- 4 122 064
- US-A1- 2003 121 713
- US-A1- 2005 082 106

## Beschreibung

Die Erfindung betrifft eine Lenkvorrichtung für ein Flurförderzeug nach den Oberbegriffen der Ansprüche 1, 4 und 7.

Bei derart ausgeführte Lenkvorrichtungen besteht zwischen dem meist als Lenkrad ausgeführten Lenkorgan und dem auf der Fahrbahn aufstehenden lenkbaren Rad keine mechanische Verbindung. Stattdessen wird mit dem beispielsweise als Winkelsensor ausgeführten Lenksignalgeber die Drehstellung des Lenkorgans erfasst und ein davon abhängiges elektrisches Signal erzeugt, das dann der elektrischen Steuervorrichtung zugeführt wird. Diese Steuervorrichtung wertet das elektrische Signal aus und steuert daraufhin den elektrischen Lenkmotor an, der eine Lenkbewegung des lenkbaren Rads bewirkt. Der tatsächlich Lenkwinkel des lenkbaren Rads wird von dem Lenkwinkelsensor erfasst und ebenfalls der Steuervorrichtung zugeführt. Derartige Lenkvorrichtungen werden üblicherweise als elektrische Lenkvorrichtungen oder "steer-by-wire" Lenkvorrichtungen bezeichnet.

Die auf das lenkbare Rad wirkenden Lenkkräfte werden bei gattungsgemäßen Lenkvorrichtungen auf Grund der nicht vorhanden mechanischen Verbindung nicht auf das Lenkorgan übertragen. Um die Bedieneigenschaften einer mechanischen Lenkung nachzuempfinden und der Bedienperson ein Gefühl für die am lenkbaren Rad tatsächlich vorhandenen Lenkkräfte zu vermitteln, ist es beispielsweise aus der DE 100 33 107 A1 bekannt, am Lenkorgan eine Bremsvorrichtung anzuordnen, die von der Steuervorrichtung angesteuert wird, um ein definiertes Bremsmoment auf das Lenkorgan auszuüben.

Ein weiteres zweckmäßiges Merkmal von mechanischen Lenkungen besteht darin, dass ein Weiterdrehen des Lenkorgans nicht mehr möglich ist, wenn die gelenkten Räder ihren maximalen Lenkwinkel erreicht haben. Um diese Eigenschaft bei einer vollelektrischen Lenkung nachzubilden, schlägt die gattungsbildende Druckschrift US 2003/0121713 A1 vor, an der Lenkwelle des Lenkrads einen magnetorheologischen Dämpfer und einen Elektromotor anzuordnen.

Der Erfindung liegt daher die Aufgabe zugrunde, eine Lenkvorrichtung der eingangs genannten Art zur Verfügung zu stellen, die einfach aufgebaut ist und bei der ein Erreichen des maximalen Lenkwinkels in vergleichbarer Weise am Lenkorgan spürbar ist, wie bei einer mechanischen Lenkung.

Diese Aufgabe wird erfindungsgemäß durch die kennzeichnenden Merkmale des Anspruchs 1 gelöst. Die Steuervorrichtung erkennt durch ein entsprechendes Signal des Lenkwinkelsensors, dass das lenkbare Rad seinen maximalen Lenkwinkel erreicht hat. Daraufhin wird die Bremsvorrichtung durch die Steuervorrichtung derart aktiviert, dass einem Weiterdrehen des Lenkorgans in Richtung einer weiteren Vergrößerung des Lenkwinkels ein Bremsmoment entgegenwirkt. Ein Zurückdrehen des Lenkorgans in die entgegengesetzte Richtung ist jedoch ungehindert möglich. Die Bedienperson erhält dadurch den Eindruck, als hätte das Lenkorgan einen Anschlag erreicht, der ein Weiterdrehen des Lenkorgans in eine erste Richtung verhindert, ein Zurückdrehen des Lenkorgans jedoch widerstandsfrei ermöglicht. Hierfür ist die Steuervorrichtung derart ausgeführt, dass die Bremsvorrichtung aktiviert wird, wenn der Lenkwinkelsensor erfasst, dass der Lenkwinkel des lenkbaren Rads dem maximalen Lenkwinkel entspricht, wobei die Bremsvorrichtung für die Drehrichtung des Lenkorgans, die einer Vergrößerung des Lenkwinkels entspricht, wirksam ist, und für die andere Drehrichtung des Lenkorgans, die einer Verringerung des Lenkwinkels entspricht, nicht wirksam ist. Die Bremsvorrichtung umfasst mindestens ein Bremselement, das ein nicht drehbares Bremsengehäuse und einen relativ zu dem Bremsengehäuse drehbar gelagerten Bremskörper aufweist, wobei durch Betätigen des Bremselements eine Rotationsbewegung des Bremskörpers abbremsbar ist. Das Bremsengehäuse ist beispielsweise starr an einem Rahmen des Flurförderzeugs befestigt. Der Bremskörper hingegen ist direkt oder indirekt mit dem Lenkorgan oder mit einer zum Lenkorgan gehörenden Lenkwelle verbunden, so dass eine Drehbewegung des Lenkorgans auf den Bremskörper übertragen werden kann. Eine Drehbewegung des Lenkorgans ist mittels einer Wellenverbindung auf den Bremskörper übertragbar, wobei die Wellenverbindung ein definiertes Spiel aufweist. Die genannte Wellenverbindung stellt also keine starre Drehverbindung zwischen Lenkorgan und Bremskörper dar, sondern weist in Rotationsrichtung ein Spiel auf, innerhalb dessen das Lenkorgan unabhängig von dem Bremskörper gedreht werden kann.

Hierbei ist die Wellenverbindung derart ausgeführt, dass nach einem Wechsel der Drehrichtung des Lenkorgans die Drehbewegung des Lenkorgans zunächst nicht auf den Bremskörper übertragen wird. Für den vorliegenden Betrachtungsfall am Endanschlag des lenkbaren Rads ergibt sich dabei folgende Wirkungsweise: Das Lenkorgan wird gemeinsam mit dem Bremskörper in die erste Richtung gedreht, bis das lenkbare Rad seinen mechanischen Lenkanschlag erreicht hat. Dies wird der Steuervorrichtung signalisiert, die daraufhin das Bremselement betätigt. Ein Weiterdrehen des Lenkorgans in die erste Richtung ist wegen des betätigten Bremselements praktisch nicht möglich. Ein Zurückdrehen des Lenkorgans in die entgegengesetzte zweite Richtung ist auf Grund des Spiels in der Wellenverbindung zunächst auch bei betätigtem Bremselement ungehindert möglich. Dieses Zurückdrehen wird von dem Lenksignalgeber erfasst und über die Steuervorrichtung in eine Lenkbewegung des lenkbaren Rads umgesetzt. Dieses befindet sich damit nicht mehr am Lenkanschlag, so dass die Steuervorrichtung das Bremselement löst, bevor das Ende des Spiels in der Wellenverbindung erreicht ist und die Drehbewegung des Lenkorgans auch in der zweiten Richtung auf den Bremskörper übertragen wird.

In einer möglichen Ausführungsform weist das Lenkorgan einen Mitnehmer auf, der in eine Aussparung am Bremskörper eingreift, wobei die Aussparung in Umfangsrichtung größer ist als der Mitnehmer. Der Mitnehmer kann beispielsweise von einem zylinderförmigen Zapfen gebildet sein, während die Aussparung als ein sich in Umfangsrichtung erstreckendes Langloch ausgeführt ist.

Ebenso wird die gestellte Aufgabe durch die kennzeichnenden Merkmale des Anspruchs 4 gelöst. Diese Lösung sieht vor, dass das Lenkorgan mittels mindestens eines Freilaufs mit dem mindestens einen Bremskörper verbunden ist, wobei der Freilauf eine Bewegung des Lenkorgans in einer ersten Drehrichtung auf den Bremskörper überträgt und der Freilauf eine Bewegung des Lenkorgans in einer zweiten, zur ersten Drehrichtung entgegengesetzten Drehrichtung nicht auf den Bremskörper überträgt. An Stelle des Spiels in der Wellenverbindung ist hier ein Freilauf vorgesehen, der eine Drehbewegung des Lenkorgans in einer ersten Richtung jederzeit auf den Bremskörper überträgt, eine Drehbewegung des Lenkorgans in der entgegengerichteten zweiten Richtung jedoch unabhängig von dem Bremskörper, also auch bei stillstehendem Bremskörper ermöglicht.

Hierbei umfasst die Bremsvorrichtung ein weiteres Bremselement, dessen Bremskörper ebenfalls mittels eines weiteren Freilaufs mit dem Lenkorgan verbunden ist, wobei der weitere Freilauf eine Bewegung des Lenkorgans in der zweiten Drehrichtung auf den Bremskörper überträgt und der weitere Freilauf eine Bewegung des Lenkorgans in der ersten Drehrichtung nicht auf den Bremskörper überträgt. Für den linksseitigen und den rechtsseitigen Endanschlag der gelenkten Räder ist damit jeweils ein Bremselement mit jeweils einem Freilauf vorgesehen.

Die Steuervorrichtung ist derart ausgeführt, dass das erste Bremselement der Bremsvorrichtung aktiviert wird, wenn der Lenkwinkelsensor erfasst, dass der Lenkwinkel des lenkbaren Rads dem maximalen Lenkwinkel nach links entspricht, und das zweite Bremselement der Bremsvorrichtung aktiviert wird, wenn der Lenkwinkelsensor erfasst, dass der Lenkwinkel des lenkbaren Rads dem maximalen Lenkwinkel nach rechts entspricht.

Eine weitere Lösung der gestellten Aufgabe ist durch die kennzeichnenden Merkmale des Anspruchs 7 gegeben. Diese Lösung sieht vor, dass die Bremsvorrichtung mindestens einen schaltbaren Freilauf umfasst, der ein nicht drehbares Freilaufgehäuse und einen relativ zu dem Freilaufgehäuse drehbar gelagerten Freilaufkörper aufweist, wobei in einer ersten Schaltstellung des Freilaufs der Freilaufkörper in beide Drehrichtungen drehbar ist und in einer zweiten Schaltstellung des Freilaufs der Freilaufkörper in einer ersten Drehrichtung drehbar ist und in einer zweiten Drehrichtung nicht drehbar ist. Ein schaltbarer Freilauf weist zwei Schaltstellungen auf, zwischen denen mittels elektrischer Signale umgeschaltet werden kann. Während des normalen Betriebs der Lenkvorrichtung ist der Freilaufkörper und damit das Lenkorgan in beide Drehrichtungen frei drehbar. Wenn das lenkbare Rad seine Endstellung erreicht, wird der Freilauf so geschaltet, dass ein Weiterdrehen des Lenkorgans in Richtung einer weiteren Vergrößerung des Lenkwinkels gesperrt ist, ein Zurückdrehen des Lenkorgans jedoch ungehindert möglich ist.

Um einen linken und einen rechten Lenkradanschlag darstellen zu können, umfasst die Bremsvorrichtung einen weiteren schaltbaren Freilauf, wobei in einer ersten Schaltstellung des weiteren Freilaufs der Freilaufkörper in beide Drehrichtungen drehbar ist und in einer zweiten Schaltstellung des weiteren Freilaufs der Freilaufkörper in der zweiten Drehrichtung drehbar ist und in der ersten Drehrichtung nicht drehbar ist.

Zweckmäßigerweise ist das mindestens eine Bremselement von einer Magnetbremse gebildet. Die für die Bremsbetätigung erforderliche Kraft wird dabei elektrisch mittels eines Elektromagnets erzeugt. Die elektrische Ansteuerung durch die Steuervorrichtung gestaltet sich hierdurch besonders einfach.

Wenn das mindestens eine Bremselement von einer Federspeicherbremse gebildet ist, ergibt sich der zusätzliche Vorteil, dass das Lenkrad bei außer Betrieb befindlichem Flurförderzeug blockiert ist. Die Lenkfunktion wird dann bei Inbetriebnahme des Flurförderzeugs frei gegeben, indem die Federspeicherbremsen gelöst werden.

Weitere Vorteile und Einzelheiten der Erfindung werden anhand der in den schematischen Figuren dargestellten Ausführungsbeispiele näher erläutert. Dabei zeigt
- Figur 1: eine elektrische Lenkvorrichtung mit einem Bremselement und einer spielbehafteten Wellenverbindung,
- Figur 2: eine elektrische Lenkvorrichtung mit zwei Bremselementen und zwei Freiläufen.

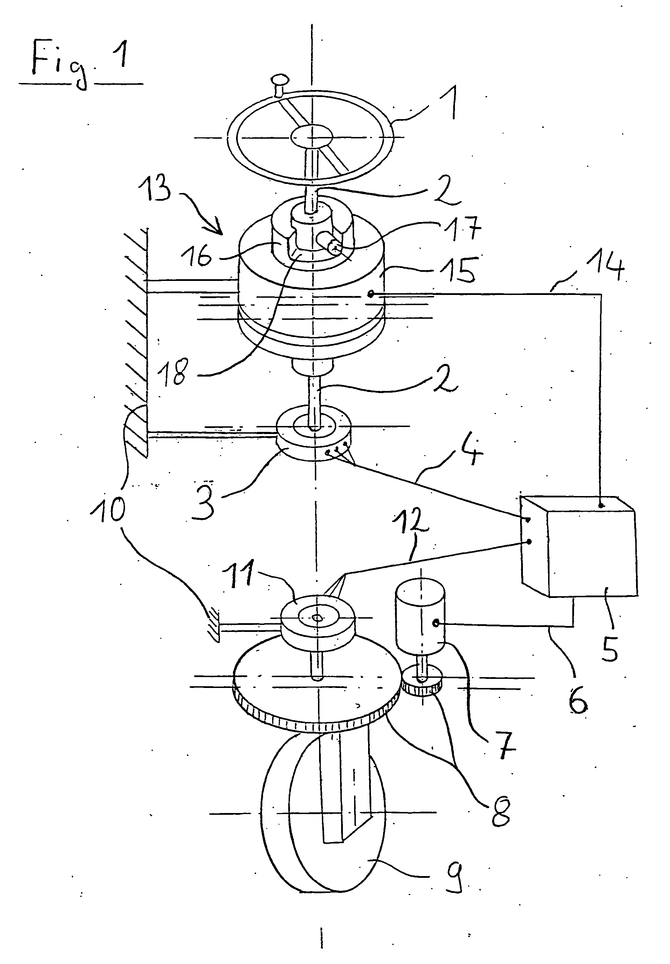

In Figur 1 ist eine elektrische Lenkvorrichtung eines Flurförderzeugs dargestellt, bei der die Drehbewegung eines als Lenkrad ausgeführten Lenkorgans 1 über eine Lenkwelle 2 auf einen Lenksignalgeber 3 übertragen wird. Der an einem flurförderzeugfesten Bauteil 10 befestigte Lenksignalgeber 3 ist über eine Signalleitung 4 mit einer elektrischen Steuervorrichtung 5 verbunden, die über eine Steuerleitung 6 einen elektrischen Lenkmotor 7 ansteuert. Über ein Lenkgetriebe 8 erzeugt der Lenkmotor 7 eine Lenkbewegung des lenkbaren Rads 9. Die tatsächliche Lenkposition des lenkbaren Rads 9 wird mittels eines Lenkwinkelsensors 11 erfasst und über eine Signalleitung 11 ebenfalls der Steuervorrichtung zugeführt.

Erfindungsgemäß ist auf der Lenkwelle 2 eine Bremsvorrichtung 13 angeordnet, die in dieser Ausführungsform ein einziges, von der Steuervorrichtung 5 über eine Steuerleitung 14 ansteuerbares Bremselement aufweist. Das Bremselement umfasst einen nicht drehbar an dem flurförderzeugfesten Bauteil 10 befestigtes Bremsengehäuse 15 und einen Bremskörper 16. Bei nicht betätigtem Bremselement kann der Bremskörper 16 relativ zu dem Bremsengehäuse 15 frei gedreht werden, bei betätigtem Bremselement ist der Bremskörper 16 praktisch drehstarr in dem Bremsengehäuse 15 festgelegt.

Der Bremskörper 16 ist über eine spielbehaftete Wellenverbindung mit der Lenkwelle 2 verbunden. Im vorliegenden Ausführungsbeispiel umfasst die Wellenverbindung einen an der Lenkwelle 2 angeordneten Zapfen 17, der in eine Aussparung 18 am Bremskörper 16 eingreift. Da die Aussparung 18 in Umfangsrichtung größer ist als der Durchmesser des Zapfens 17, weist die Wellenverbindung Spiel auf.

Die Funktionsweise ist folgende: Wenn das Lenkorgan 1 ausgehend von der dargestellten Position nach links (im Gegenuhrzeigersinn) gedreht wird, dreht sich der Bremskörper 16 mit, da der Zapfen 17 an der entsprechenden Seite der Ausnehmung 18 anliegt. Wenn nun das lenkbare Rad 9 seinen nicht dargestellten linken Anschlag erreicht, erkennt die Steuervorrichtung 5 dies anhand des entsprechenden Ausgangssignals des Lenksensors 11 und veranlasst ein Betätigen des Bremselements, sodass der Bremskörper 16 festgelegt wird und dadurch auch ein Weiterdrehen des Lenkorgans 1 nach links verhindert wird. Ein Zurückdrehen des Lenkorgans 1 und der Lenkwelle 2 nach rechts ist jedoch zunächst ungehindert möglich, da diese Bewegung auf Grund des Spiels in der Wellenverbindung zunächst nicht auf den Bremskörper 16 übertragen wird. Sobald jedoch das Lenkorgan 1 nach rechts gedreht wird, führt dies auch zu einer Lenkbewegung des lenkbaren Rads 9 nach rechts, wobei dieses seine Endposition verlässt, woraufhin die Steuervorrichtung 5 die Bremsvorrichtung 13 löst. Die Funktionsweise bei Erreichen des rechten Anschlags des lenkbaren Rads 9 ist analog.

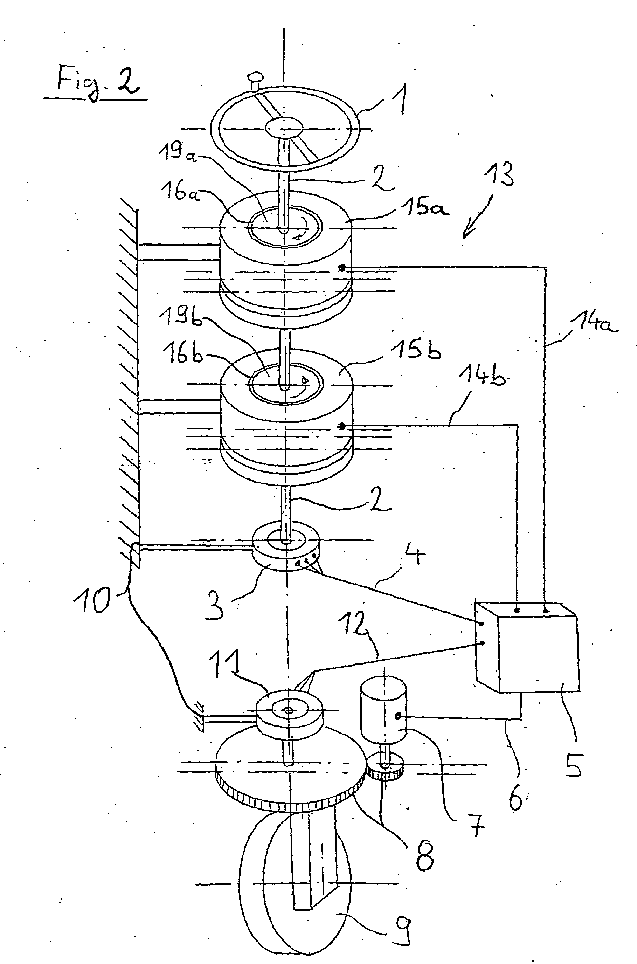

Figur 2 zeigt eine hinsichtlich der Betätigung der Lenkfunktion identische Anordnung. Im Gegensatz zu der Anordnung gemäß Fig. 1 weist die an der durchgehenden Lenkwelle 2 angeordnete Bremsvorrichtung 13 zwei Bremselemente mit jeweils einem Bremsengehäuse 15a, 15b und jeweils einem Bremskörper 16a, 16b auf. Die Bremskörper 16a, 16b sind mittels jeweils eines Freilaufs 19a, 19b mit der Lenkwelle 2 verbunden, wobei der Freilauf 19a jederzeit eine Drehbewegung der Lenkwelle 2 und damit des Lenkorgans 1 nach rechts (im Uhrzeigersinn) und der Freilauf 19b jederzeit eine Drehbewegung der Lenkwelle 2 nach links (im Gegenuhrzeigersinn) zulässt.

Die Funktionsweise ist folgende: Während eines normalen Lenkvorgangs sind beide Bremselemente gelöst, solange das lenkbare Rad 9 nicht einen seiner Anschläge erreicht. Beide Bremskörper 16a, 16b sind dabei in ihren Bremsengehäusen 15a, 15b frei drehbar. Wenn das Lenkorgan 1 nun nach links gedreht wird, bis das lenkbare Rad 9 seinen linken Endanschlag erreicht, betätigt die Steuervorrichtung 5 das erste Bremselement, so dass der Bremskörper 16a im Bremsengehäuse 15a festgelegt wird. Ein Weiterdrehen des Lenkorgans 1 nach links ist dadurch verhindert. Ein Drehen des Lenkorgans 1 nach rechts, also ein Zurücklenken in die entgegengesetzte Richtung, ist jedoch mittels des Freilaufs 19a ohne spürbaren Widerstand möglich. Bei Erreichen des rechten Endanschlags des lenkbaren Rads 9 ist die Funktionsweise analog, wobei in diesem Fall der zweite Bremskörper 16b blockiert wird und der Freilauf 19b dann ausschließlich eine Drehung des Lenkorgans 1 nach links zulässt.

## Patentansprüche

1. Lenkvorrichtung für ein Flurförderzeug, mit einem drehbar gelagerten Lenkorgan (1), einem Lenksignalgeber (3) zum Erfassen der Drehstellung des Lenkorgans (1) und einer Bremsvorrichtung (13) zum Erzeugen eines auf das Lenkorgan (1) wirkenden Bremsmoments, sowie einem lenkbaren Rad (9), einem Lenkmotor (7) zum Erzeugen einer Lenkbewegung des lenkbaren Rads (9) und einem Lenkwinkelsensor (11) zum Erfassen des Lenkwinkels des lenkbaren Rads (9), wobei der Lenksignalgeber (3), der Lenkwinkelsensor (11), der Lenkmotor (7) und die Bremsvorrichtung (13) mit einer elektrischen Steuervorrichtung (5) verbunden sind, die derart ausgeführt ist, dass die Bremsvorrichtung (13) aktiviert wird, wenn der Lenkwinkelsensor (11) erfasst, dass der Lenkwinkel des lenkbaren Rads (9) dem maximalen Lenkwinkel entspricht, wobei die Bremsvorrichtung (13) für die Drehrichtung des Lenkorgans (1), die einer Vergrößerung des Lenkwinkels entspricht, wirksam ist, und für die andere Drehrichtung des Lenkorgans (1), die einer Verringerung des Lenkwinkels entspricht, nicht wirksam ist, und wobei die Bremsvorrichtung (13) mindestens ein Bremselement umfasst, das ein nicht drehbares Bremsengehäuse (15, 15a, 15b) und einen relativ zu dem Bremsengehäuse (15, 15a, 15b) drehbar gelagerten Bremskörper (16, 16a, 16b) aufweist, wobei durch Betätigen des Bremselements eine Rotationsbewegung des Bremskörpers (16, 16a, 16b) abbremsbar ist, **dadurch gekennzeichnet, dass** eine Drehbewegung des Lenkorgans (1) mittels einer Wellenverbindung auf den Bremskörper (16) übertragbar ist, wobei die Wellenverbindung ein definiertes Spiel aufweist.

2. Lenkvorrichtung nach Anspruch 1, **dadurch gekennzeichnet, dass** die Wellenverbindung derart ausgeführt ist, dass nach einem Wechsel der Drehrichtung des Lenkorgans (1) die Drehbewegung des Lenkorgans (1) zunächst nicht auf den Bremskörper (16) übertragen wird.

3. Lenkvorrichtung nach Anspruch 1 oder 2, **dadurch gekennzeichnet, dass** das Lenkorgan (1) einen Mitnehmer (17) aufweist, der in eine Aussparung am Bremskörper (16) eingreift, wobei die Aussparung (18) in Umfangsrichtung größer ist als der Mitnehmer (17).

4. Lenkvorrichtung für ein Flurförderzeug, mit einem drehbar gelagerten Lenkorgan (1), einem Lenksignalgeber (3) zum Erfassen der Drehstellung des Lenkorgans (1) und einer Bremsvorrichtung (13) zum Erzeugen eines auf das Lenkorgan (1) wirkenden Bremsmoments, sowie einem lenkbaren Rad (9), einem Lenkmotor (7) zum Erzeugen einer Lenkbewegung des lenkbaren Rads (9) und einem Lenkwinkelsensor (11) zum Erfassen des Lenkwinkels des lenkbaren Rads (9), wobei der Lenksignalgeber (3), der Lenkwinkelsensor (11), der Lenkmotor (7) und die Bremsvorrichtung (13) mit einer elektrischen Steuervorrichtung (5) verbunden sind, die derart ausgeführt ist, dass die Bremsvorrichtung (13) aktiviert wird, wenn der Lenkwinkelsensor (11) erfasst, dass der Lenkwinkel des lenkbaren Rads (9) dem maximalen Lenkwinkel entspricht, wobei die Bremsvorrichtung (13) für die Drehrichtung des Lenkorgans (1), die einer Vergrößerung des Lenkwinkels entspricht, wirksam ist, und für die andere Drehrichtung des Lenkorgans (1), die einer Verringerung des Lenkwinkels entspricht, nicht wirksam ist, und wobei die Bremsvorrichtung (13) mindestens ein Bremselement umfasst, das ein nicht drehbares Bremsengehäuse (15, 15a, 15b) und einen relativ zu dem Bremsengehäuse (15, 15a, 15b) drehbar gelagerten Bremskörper (16, 16a, 16b) aufweist, wobei durch Betätigen des Bremselements eine Rotationsbewegung des Bremskörpers (16, 16a, 16b) abbremsbar ist, **dadurch gekennzeichnet, dass** das Lenkorgan (1) mittels mindestens eines Freilaufs (19a) mit dem mindestens einen Bremskörper (16a) verbunden ist, wobei der Freilauf (19a) eine Bewegung des Lenkorgans (1) in einer ersten Drehrichtung auf den Bremskörper (16a) überträgt und der Freilauf (19a) eine Bewegung des Lenkorgans (1) in einer zweiten, zur ersten Drehrichtung entgegengesetzten Drehrichtung nicht auf den Bremskörper (16a) überträgt.

5. Lenkvorrichtung nach Anspruch 4, **dadurch gekennzeichnet, dass** die Bremsvorrichtung (13) ein weiteres Bremselement umfasst, dessen Bremskörper (16b) ebenfalls mittels eines weiteren Freilaufs (19b) mit dem Lenkorgan (1) verbunden ist, wobei der weitere Freilauf (19b) eine Bewegung des Lenkorgans (1) in der zweiten Drehrichtung auf den Bremskörper (16b) überträgt und der weitere Freilauf (19b) eine Bewegung des Lenkorgans (1) in der ersten Drehrichtung nicht auf den Bremskörper (16b) überträgt.

6. Lenkvorrichtung nach Anspruch 5, **dadurch gekennzeichnet, dass** die Steuervorrichtung (5) derart ausgeführt ist, dass das erste Bremselement der Bremsvorrichtung (13) aktiviert wird, wenn der Lenkwinkelsensor (11) erfasst, dass der Lenkwinkel des lenkbaren Rad (9) dem maximalen Lenkwinkel nach links entspricht, und das zweite Bremselement der Bremsvorrichtung (13) aktiviert wird, wenn der Lenkwinkelsensor (11) erfasst, dass der Lenkwinkel des lenkbaren Rads (9) dem maximalen Lenkwinkel nach rechts entspricht.

7. Lenkvorrichtung für ein Flurförderzeug, mit einem drehbar gelagerten Lenkorgan (1), einem Lenksignalgeber (3) zum Erfassen der Drehstellung des Lenkorgans (1) und einer Bremsvorrichtung (13) zum Erzeugen eines auf das Lenkorgan (1) wirkenden Bremsmoments, sowie einem lenkbaren Rad (9), einem Lenkmotor (7) zum Erzeugen einer Lenkbewegung des lenkbaren Rads (9) und einem Lenkwinkelsensor (11) zum Erfassen des Lenkwinkels des lenkbaren Rads (9), wobei der Lenksignalgeber (3), der Lenkwinkelsensor (11), der Lenkmotor (7) und die Bremsvorrichtung (13) mit einer elektrischen Steuervorrichtung (5) verbunden sind, die derart ausgeführt ist, dass die Bremsvorrichtung (13) aktiviert wird, wenn der Lenkwinkelsensor (11) erfasst, dass der Lenkwinkel des lenkbaren Rads (9) dem maximalen Lenkwinkel entspricht, wobei die Bremsvorrichtung (13) für die Drehrichtung des Lenkorgans (1), die einer Vergrößerung des Lenkwinkels entspricht, wirksam ist, und für die andere Drehrichtung des Lenkorgans (1), die einer Verringerung des Lenkwinkels entspricht, nicht wirksam ist, **dadurch gekennzeichnet, dass** die Bremsvorrichtung (13) mindestens einen schaltbaren Freilauf umfasst, der ein nicht drehbares Freilaufgehäuse und einen relativ zu dem Freilaufgehäuse drehbar gelagerten Freilaufkörper aufweist, wobei in einer ersten Schaltstellung des Freilaufs der Freilaufkörper in beide Drehrichtungen drehbar ist und in einer zweiten Schaltstellung des Freilaufs der Freilaufkörper in einer ersten Drehrichtung drehbar ist und in einer zweiten Drehrichtung nicht drehbar ist.

8. Lenkvorrichtung nach Anspruch 7, **dadurch gekennzeichnet, dass** die Bremsvorrichtung (13) einen weiteren schaltbaren Freilauf umfasst, wobei in einer ersten Schaltstellung des weiteren Freilaufs der Freilaufkörper in beide Drehrichtungen drehbar ist und in einer zweiten Schaltstellung des weiteren Freilaufs der Freilaufkörper in der zweiten Drehrichtung drehbar ist und in der ersten Drehrichtung nicht drehbar ist.

9. Lenkvorrichtung nach einem der Ansprüche 1 bis 6, **dadurch gekennzeichnet, dass** das mindestens eine Bremselement von einer Magnetbremse gebildet ist.

10. Lenkvorrichtung nach einem der Ansprüche 1 bis 6, **dadurch gekennzeichnet, dass** das mindestens eine Bremselement von einer Federspeicherbremse gebildet ist.

## Claims

1. Steering device for an industrial truck, having a rotatably mounted steering element (1), a steering signal transmitter (3) for sensing the rotational position of the steering element (1) and a brake device (13) for generating a braking torque which acts on the steering element (1), as well as a steerable wheel (9), a steering motor (7) for generating a steering movement of the steerable wheel (9) and a steering angle sensor (11) for sensing the steering angle of the steerable wheel (9), wherein the steering signal transmitter (3), the steering angle sensor (11), the steering motor (7) and the brake device (13) are connected to an electric control device (5) which is embodied in such a way that the brake device (13) is activated when the steering angle sensor (11) senses that the steering angle of the steerable wheel (9) corresponds to a maximum steering angle, wherein the brake device (13) for the direction of rotation of the steering element (1) which corresponds to an increase in the steering angle is active, and is inactive for the other direction of rotation of the steering element (1) which corresponds to a reduction in the steering angle, and wherein the brake device (13) comprises at least one brake element which has a non-rotatable brake housing (15, 15a, 15b) and a brake body (16, 16a, 16b) which is mounted so as to be rotatable in relation to the brake housing (15, 15a, 15b), wherein a rotational movement of the brake body (16, 16a, 16b) can be braked by activating the brake element, **characterized in that** a rotational movement of the steering element (1) can be transmitted to the brake body (16) by means of a shaft connection, wherein the shaft connection has a defined degree of play.

2. Steering device according to Claim 1, **characterized in that** the shaft connection is embodied in such a way that after the direction of rotation of the steering element (1) changes the rotational movement of the steering element (1) is at first not transmitted to the brake body (16).

3. Steering device according to Claim 1 or 2, **characterized in that** the steering element (1) has a driver (17) which engages in a cut-out on the brake body (16), wherein the cut-out (18) is larger in the circumferential direction than the driver (17).

4. Steering device for an industrial truck, having a rotatably mounted steering element (1), a steering signal transmitter (3) for sensing the rotational position of the steering element (1) and a brake device (13) for generating a braking torque which acts on the steering element (1), as well as a steerable wheel (9), a steering motor (7) for generating a steering movement of the steerable wheel (9) and a steering angle sensor (11) for sensing the steering angle of the steerable wheel (9), wherein the steering signal transmitter (3), the steering angle sensor (11), the steering motor (7) and the brake device (13) are connected to an electric control device (5) which is embodied in such a way that the brake device (13) is activated when the steering angle sensor (11) senses that the steering angle of the steerable wheel (9) corresponds to a maximum steering angle, wherein the brake device (13) for the direction of rotation of the steering element (1) which corresponds to an increase in the steering angle is active, and is inactive for the other direction of rotation of the steering element (1) which corresponds to a reduction in the steering angle, and wherein the brake device (13) comprises at least one brake element which has a non-rotatable brake housing (15, 15a, 15b) and a brake body (16, 16a, 16b) which is mounted so as to be rotatable in relation to the brake housing (15, 15a, 15b), wherein a rotational movement of the brake body (16, 16a, 16b) can be braked by activating the brake element, **characterized in that** the steering element (1) is connected to the at least one brake body (16a) by means of at least one freewheel (19a), wherein the freewheel (19a) transmits a movement of the steering element (1) in a first direction of rotation to the brake body (16a), and the freewheel (19a) does not transmit a movement of the steering element (1) to the brake body (16a) in a second direction of rotation which is opposed to the first direction of rotation.

5. Steering device according to Claim 4, **characterized in that** the brake device (13) comprises a further brake element whose brake body (16b) is also connected to the steering element (1) by means of a further freewheel (19b), wherein the further freewheel (19b) transmits a movement of the steering element (1) to the brake body (16b) in the second direction of rotation, and the further freewheel (19b) does not transmit a movement of the steering element (1) to the brake body (16b) in the first direction of rotation.

6. Steering device according to Claim 5, **characterized in that** the control device (5) is embodied in such a way that the first brake element of the brake device (13) is activated if the steering angle sensor (11) senses that the steering angle of the steerable wheel (9) corresponds to the maximum steering angle to the left, and the second brake element of the brake device (13) is activated if the steering angle sensor (11) senses that the steering angle of the steerable wheel (9) corresponds to the maximum steering angle to the right.

7. Steering device for an industrial truck, having a rotatably mounted steering element (1), a steering signal transmitter (3) for sensing the rotational position of the steering element (1) and a brake device (13) for generating a braking torque which acts on the steering element (1), as well as a steerable wheel (9), a steering motor (7) for generating a steering movement of the steerable wheel (9) and a steering angle sensor (11) for sensing the steering angle of the steerable wheel (9), wherein the steering signal transmitter (3), the steering angle sensor (11), the steering motor (7) and the brake device (13) are connected to an electric control device (5) which is embodied in such a way that the brake device (13) is activated when the steering angle sensor (11) senses that the steering angle of the steerable wheel (9) corresponds to a maximum steering angle, wherein the brake device (13) for the direction of rotation of the steering element (1) which corresponds to an increase in the steering angle is active, and is inactive for the other direction of rotation of the steering element (1) which corresponds to a reduction in the steering angle, **characterized in that** the brake device (13) comprises at least one switchable freewheel which has a non-rotatable freewheel housing and a free-wheel body which is mounted so as to be rotatable in relation to the freewheel housing, wherein in a first switched position of the freewheel the freewheel body can be rotated in both directions of rotation, and in a second switched position of the freewheel the freewheel body can be rotated in a first direction of rotation and cannot be rotated in a second direction of rotation.

8. Steering device according to Claim 7, **characterized in that** the brake device (13) comprises a further switchable freewheel, wherein in a first switched position of the further freewheel the freewheel body can be rotated in both directions of rotation, and in a second switched position of the further freewheel the freewheel body can be rotated in the second direction of rotation and cannot be rotated in the first direction of rotation.

9. Steering device according to one of Claims 1 to 6, **characterized in that** the at least one brake element is formed by an electromagnetic brake.

10. Steering device according to one of Claims 1 to 6, **characterized in that** the at least one brake element is formed by a spring-loaded brake.

## Revendications

1. Dispositif de direction pour un chariot de manutention, avec un organe de direction rotatif (1), un capteur de signal de direction (3) pour détecter la position angulaire de l'organe de direction (1), et un dispositif de freinage (13) permettant de produire un couple de freinage agissant sur l'organe de direction (1), ainsi qu'une roue directrice (9), un moteur de direction (7) pour produire un mouvement de direction de la roue directrice (9) et un détecteur d'angle de direction (11) pour détecter l'angle de direction de la roue directrice (9), dans lequel le capteur de signal de direction (3), le détecteur d'angle de direction (11), le moteur de direction (7) et le dispositif de freinage (13) sont reliés à un dispositif de commande électrique (5), qui est conçu de telle manière que le dispositif de freinage (13) soit activé lorsque le détecteur d'angle de direction (11) détecte que l'angle de direction de la roue directrice (9) correspond à l'angle de direction maximal, dans lequel le dispositif de freinage (13) est actif pour le sens de rotation de l'organe de direction (1) qui correspond à une augmentation de l'angle de direction, et n'est pas actif pour l'autre sens de rotation de l'organe de direction (1) qui correspond à une diminution de l'angle de direction, et dans lequel le dispositif de freinage (13) comprend au moins un élément de frein, qui comprend un boîtier de frein non rotatif (15, 15a, 15b) et un corps de frein (16, 16a, 16b) pouvant tourner par rapport au boîtier de frein (15, 15a, 15b), dans lequel un mouvement de rotation du corps de frein (16, 16a, 16b) peut être freiné en actionnant l'élément de frein, **caractérisé en ce qu'**un mouvement de rotation de l'organe de direction (1) peut être transmis au corps de frein (16) au moyen d'une jonction d'arbres, dans lequel la jonction d'arbres présente un jeu défini.

2. Dispositif de direction selon la revendication 1, **caractérisé en ce que** la liaison d'arbres est réalisée de telle manière que, après un changement du sens de rotation de l'organe de direction (1), le mouvement de rotation de l'organe de direction (1) ne soit d'abord pas transmis au corps de frein (16).

3. Dispositif de direction selon la revendication 1 ou 2, **caractérisé en ce que** l'organe de direction (1) comporte un entraîneur (17), qui s'engage dans un évidement sur le corps de frein (16), dans lequel l'évidement (18) est plus grand que l'entraîneur (17) dans la direction périphérique.

4. Dispositif de direction pour un chariot de manutention, avec un organe de direction rotatif (1), un capteur de signal de direction (3) pour détecter la position angulaire de l'organe de direction (1), et un dispositif de freinage (13) permettant de produire un couple de freinage agissant sur l'organe de direction (1), ainsi qu'une roue directrice (9), un moteur de direction (7) pour produire un mouvement de direction de la roue directrice (9) et un détecteur d'angle de direction (11) pour détecter l'angle de direction de la roue directrice (9), dans lequel le capteur de signal de direction (3), le détecteur d'angle de direction (11), le moteur de direction (7) et le dispositif de freinage (13) sont reliés à un dispositif de commande électrique (5), qui est conçu de telle manière que le dispositif de freinage (13) soit activé lorsque le détecteur d'angle de direction (11) détecte que l'angle de direction de la roue directrice (9) correspond à l'angle de direction maximal, dans lequel le dispositif de freinage (13) est actif pour le sens de rotation de l'organe de direction (1) qui correspond à une augmentation de l'angle de direction, et n'est pas actif pour l'autre sens de rotation de l'organe de direction (1) qui correspond à une diminution de l'angle de direction, et dans lequel le dispositif de freinage (13) comprend au moins un élément de frein, qui comprend un boîtier de frein non rotatif (15, 15a, 15b) et un corps de frein (16, 16a, 16b) pouvant tourner par rapport au boîtier de frein (15, 15a, 15b), dans lequel un mouvement de rotation du corps de frein (16, 16a, 16b) peut être freiné en actionnant l'élément de frein, **caractérisé en ce** l'organe de direction (1) est relié à l'au moins un corps de frein (16a) au moyen d'au moins une roue libre (19a), dans lequel la roue libre (19a) transmet un mouvement de l'organe de direction (1) dans un premier sens de rotation au corps de frein (16a) et la roue libre (19a) ne transmet pas un mouvement de l'organe de direction (1) dans un deuxième sens de rotation, opposé au premier sens de rotation, au corps de frein (16a).

5. Dispositif de direction selon la revendication 4, **caractérisé en ce que** le dispositif de freinage (13) comprend un autre élément de frein, dont le corps de frein (16b) est également relié à l'organe de direction (1) au moyen d'une autre roue libre (19b), dans lequel l'autre roue libre (19b) transmet un mouvement de l'organe de direction (1) dans le deuxième sens de rotation au corps de frein (16b) et l'autre roue libre (19b) ne transmet pas un mouvement de l'organe de direction (1) dans le premier sens de rotation au corps de frein (16b).

6. Dispositif de direction selon la revendication 5, **caractérisé en ce que** le dispositif de commande (5) est conçu de telle manière que le premier élément de frein du dispositif de freinage (13) soit activé lorsque le détecteur d'angle de direction (11) détecte que l'angle de direction de la roue directrice (9) correspond à l'angle de direction maximal vers la gauche, et que le deuxième élément de frein du dispositif de freinage (13) soit activé lorsque le détecteur d'angle de direction (11) détecte que l'angle de direction de la roue directrice (9) correspond à l'angle de direction maximal vers la droite.

7. Dispositif de direction pour un chariot de manutention, avec un organe de direction rotatif (1), un capteur de signal de direction (3) pour détecter la position angulaire de l'organe de direction (1), et un dispositif de freinage (13) permettant de produire un couple de freinage agissant sur l'organe de direction (1), ainsi qu'une roue directrice (9), un moteur de direction (7) pour produire un mouvement de direction de la roue directrice (9) et un détecteur d'angle de direction (11) pour détecter l'angle de direction de la roue directrice (9), dans lequel le capteur de signal de direction (3), le détecteur d'angle de direction (11), le moteur de direction (7) et le dispositif de freinage (13) sont reliés à un dispositif de commande électrique (5), qui est conçu de telle manière que le dispositif de freinage (13) soit activé lorsque le détecteur d'angle de direction (11) détecte que l'angle de direction de la roue directrice (9) correspond à l'angle de direction maximal, dans lequel le dispositif de freinage (13) est actif pour le sens de rotation de l'organe de direction (1) qui correspond à une augmentation de l'angle de direction, et n'est pas actif pour l'autre sens de rotation de l'organe de direction (1) qui correspond à une diminution de l'angle de direction, **caractérisé en ce que** le dispositif de freinage (13) comporte au moins une roue libre commutable, qui comprend un boîtier de roue libre non rotatif et un corps de roue libre pouvant tourner par rapport au boîtier de roue libre, dans lequel le corps de roue libre peut tourner dans les deux sens de rotation dans une première position de commutation de la roue libre, et le corps de roue libre peut tourner dans un premier sens de rotation mais ne peut pas tourner dans un deuxième sens de rotation dans une deuxième position de commutation de la roue libre.

8. Dispositif de direction selon la revendication 7, **caractérisé en ce que** le dispositif de freinage (13) comprend une autre roue libre commutable, dans lequel le corps de roue libre peut tourner dans les deux sens de rotation dans une première position de commutation de l'autre roue libre et le corps de roue libre peut tourner dans le deuxième sens de rotation mais ne peut pas tourner dans le premier sens de rotation dans une deuxième position de commutation de l'autre roue libre.

9. Dispositif de rotation selon l'une quelconque des revendications 1 à 6, **caractérisé en ce que** l'au moins un élément de frein est formé par un frein magnétique.

10. Dispositif de direction selon l'une quelconque des revendications 1 à 6, **caractérisé en ce que** l'au moins un élément de frein est formé par un frein à accumulation.
